# EUROPEAN PATENT SPECIFICATION

(11) **EP 3 559 585 B1**
(45) Date of publication and mention of the grant of the patent: **02.02.2022**
(21) Application number: 16829171.4
(22) Date of filing: 21.12.2016
(51) Int. Cl.: F28F 27/00, F28B 11/00, G06F 17/00

(54) **CORROSION PROTECTION FOR AIR-COOLED CONDENSERS**
KORROSIONSSCHUTZ FÜR LUFTGEKÜHLTE KONDENSATOREN
PROTECTION CONTRE LA CORROSION POUR CONDENSEURS REFROIDIS PAR AIR

(43) Date of publication of application: 30.10.2019
(73) Proprietor: BL Technologies, Inc., Minnetonka, MN 55343 (US)
(72) Inventor: DALE, Trevor James, Trevose, Pennsylvania 19053 (US); ROSSI, Anthony M., Trevose, Pennsylvania 19053 (US); TROSSBACH, Robert, Trevose, Pennsylvania 19053 (US); ROBINSON, Gregory J., Trevose, Pennsylvania 19053 (US)
(74) Representative: Marks & Clerk France
(86) International application number: PCT/US2016/068047
(87) International publication number: WO 2018/118045

(56) References cited:
- EP-A1- 0 030 459
- DE-U1-202010 007 211
- US-A- 5 005 351
- US-A- 5 294 916
- US-A1- 2010 269 996

## Description

### FIELD OF THE INVENTION

The invention relates to methods for inhibiting corrosion in an air cooled condenser resulting from process conditions. In this context, document US 5,005,351 discloses a computer implemented method for establishing a corrosion protection system for a condenser, comprising: utilizing one or more processors and associated memory storing one or more programs for execution by the one or more processors, the one or more programs including instructions for: receiving data associated with at least one physical property of the air cooled condenser; receiving data associated with at least one chemical process condition of the air cooled condenser; using a pre-existing model with the data in order to identify an optimized corrosion protection system.

### BACKGROUND OF THE INVENTION

In steam generating systems, such as power plants, an air cooled condenser is used to convert steam from a gas to a liquid, after it has passed through a steam turbine. One widely used dry cooling system is direct dry cooling. In this dry cooling approach, the water vapor expands in a steam turbine, exits from the turbine through a steam pipe with a relatively large diameter, then through an upper distribution chamber where it enters a steam-air heat exchanger such as an air cooled condenser.

An air cooled condenser can include a steam inlet duct, condenser tubes, and a condensate outlet duct. Turbine exhaust steam passes into the condenser through the steam inlet duct and flows through the condenser tubes. The steam condenses inside the condenser tubes, which are externally cooled by ambient air, rather than water as in water-cooled plants.

Air is forced over outer surfaces of the condenser tubes, cooling the tubes and the steam flowing through the tubes, and causing the steam to be converted into a liquid condensate. The condensate can be reused in generating steam for the steam turbine and can later return to the condenser, where it is converted back to a liquid state.

Air cooled condensers have very large internal surfaces that are susceptible to corrosion. The corrosion is difficult to control due in part to the very large surface areas of the condenser. Left untreated, the corrosion can cause leaks leading to efficiency losses in the steam condensation process. The steam cycle can also become contaminated with corrosion products such as iron. The iron, in dissolved and particulate form, can be transported to the steam generator where it deposits on metal surfaces causing further efficiency losses, and initiating new corrosive mechanisms such as under deposit corrosion.

Air cooled condensers can suffer serious corrosion damage from acid corrosion, flow-assisted corrosion, oxygen pitting, galvanic action, and crevice attack. Air cooled condenser systems that are shut down periodically are subjected to water temperatures that may vary from ambient to 180°F (82 °C) or higher. During shutdown, oxygen can enter the water until its saturation limit is reached. When the system is returned to high-temperature operation, oxygen solubility drops, and the released oxygen attacks metal surfaces.

The effects of problems associated with corrosion damage in an air cooled condenser include increased operation and maintenance costs due to tube failures, more frequent shutdowns for cleaning and repair, reduced heat transfer efficiency, and potential product yield reduction or even plant shutdown.

Traditionally, chemical treatment of the steam cycle has been used to inhibit corrosion of the air cooled condenser. However, the chemistry is not generally applied directly to the internal surfaces of the air cooled condenser, but rather is introduced elsewhere in the steam cycle, and enters the air cooled condenser with the bulk of the steam flow. Conventional chemical treatment for corrosion protection approaches have not been found to provide the same level of corrosion inhibition in air cooled condensers as they provide in other areas of the water/steam cycle.

### SUMMARY OF THE INVENTION

In one exemplary embodiment of the invention, a method is provided for establishing an optimized corrosion protection system for an air cooled condenser.

The method can include receiving data associated with physical properties and chemical process conditions of the air cooled condenser, generating a chemical process modeling component, and using the modeling component to identify an optimized corrosion protection system based on an evaluation of iteratively altered chemical process model input variables.

In another aspect of the invention, the method can include receiving data associated with physical properties and chemical process conditions of the air cooled condenser, generating a chemical process modeling component, and using the modeling component to identify an optimized corrosion protection system based on an evaluation of iteratively altered physical properties and/or chemical process conditions of the air cooled condenser, and test data associated with the altered conditions.

In another aspect of the invention, the chemical process modeling component accepts input from a computational fluid dynamics modeling component. Input variables are iteratively altered, and the changed fluid flow of the air cooled condenser is simulated by the computational fluid dynamics modeling component. An optimized combination of input variables is determined based on an evaluation of the changed fluid flow, and the optimized combination of input variables are provided to the chemical process modeling component.

### BRIEF DESCRIPTION OF THE DRAWINGS

This invention will be further described in the appended drawings wherein:
Fig. 1 is a flow diagram of an example method for establishing an optimized corrosion protection system for an air cooled condenser; and
Fig. 2 is a block diagram of an example computing environment in which the various aspects of the innovation can be implemented.

### DETAILED DESCRIPTION

A method for developing an optimized corrosion protection system of an air cooled condenser is disclosed. The generated model is used to optimize treatment and feed of corrosion inhibitors to the steam system of an air cooled condenser so as to inhibit and minimize corrosion. In general, a corrosion inhibitor is any substance which effectively decreases the corrosion rate when added to an environment. An inhibitor can be identified in relation to its function, for example, removal of a corrosive substance, passivation, precipitation, or adsorption. The solution optimizes, for example, the chemistry of the corrosion protection feed, timing, feed rate, and point of feed.

In an embodiment, a computer implemented method for establishing a corrosion protection system for an air cooled condenser utilizes one or more processors and associated memory storing one or more programs for execution by the one or more processors, the one or more programs including instructions for receiving data associated with at least one physical property of the air cooled condenser; receiving data associated with at least one chemical process condition of the air cooled condenser, generating a chemical process modeling component based on the received data, simulating an initial condition of the air cooled condenser utilizing the chemical process modeling component, altering at least one physical property and/or at least one chemical process condition of the air cooled condenser, receiving test data associated with the altered physical property and/or chemical process condition, simulating a changed condition of the air cooled condenser based on the test data, and identifying an optimized corrosion protection system based on an evaluation of the changed condition.

In an embodiment, a computer implemented method for establishing a corrosion protection system for an air cooled condenser includes utilizing one or more processors and associated memory storing one or more programs for execution by the one or more processors, the one or more programs including instructions for receiving data associated with at least one physical property of the air cooled condenser, receiving data associated with at least one chemical process condition of the air cooled condenser, generating a chemical process modeling component based on the received data, determining an initial condition of the air cooled condenser utilizing the chemical process modeling component, predicting a changed condition of the air cooled condenser by iteratively altering at least one chemical process model input variable, identifying an optimized corrosion protection system based on an evaluation of the changed condition.

In an embodiment, a computer implemented method for establishing corrosion protection system for an air cooled condenser includes generating a computational fluid dynamics (CFD) modeling component based on the received physical property and chemical process condition data, determining an initial fluid flow associated with the air cooled condenser utilizing the CFD model component, predicting a changed fluid flow of the air cooled condenser by iteratively altering at least one CFD model input variable, identifying an optimized combination of input variables based on an evaluation of the changed fluid flow, and providing the optimized combination of input variables to the chemical process modeling component as a chemical process model input.

In an embodiment, a computer implemented method for establishing corrosion protection system for an air cooled condenser includes generating a computational fluid dynamics (CFD) modeling component based on the received physical property and chemical process condition data, determining an initial fluid flow associated with the air cooled condenser utilizing the CFD model component, simulating a changed fluid flow utilizing test data associated with iteratively altered air cooled condenser properties, identifying an optimized combination of air cooled condenser properties based on an evaluation of the changed fluid flow, and providing the optimized combination of properties to the chemical process modeling component as a chemical process model input.

In other embodiments, a computer implemented method for establishing a corrosion protection system for an air cooled condenser includes receiving by the chemical process modeling component and/or the computational fluid dynamics (CFD) modeling component test data associated with at least one physical property or at least one chemical property of the air cooled condenser, including at least one of a corrosion rate, corrosion location, corrosion activity, ambient temperature, internal temperature, process fluid temperature, pressure, fan usage, fan speed, active condenser area, chemical concentration, chemical dosage, chemical surface concentration, chemical dosage timing, and/or chemical injection point associated with the air cooled condenser, and/or a measurement of at least one of a pH, conductivity, oxidation-reduction potential, and/or alkalinity of a process fluid associated with the air cooled condenser.

In an embodiment, a chemical process condition of the air cooled condenser includes at least one of a measurement of a corrosion rate, corrosion activity, chemical level, chemical concentration, and/or a pH, conductivity, oxidation-reduction potential, and/or alkalinity of a process fluid associated with the air cooled condenser.

In embodiments, a physical property of the air cooled condenser includes at least one of pressure, temperature , fan usage, fan speed, active condenser area, flow rate and/or three dimensional computer assisted drafting data associated with the physical structure of the air cooled condenser.

In an embodiment, the model input variables include at least one a pH, conductivity, chemistry, chemical concentration, chemical dosage, chemical surface concentration, oxidation-reduction potential and/or alkalinity of a process fluid associated with the air cooled condenser.

In embodiments, the model input variables include at least one of a temperature, pressure, fan usage, fan speed, active condenser area, flow rate, chemical dosage timing, chemical dosage injection point, also referred to as feed point, chemical injection nozzle type, nozzle size, nozzle location, chemical injection quill type, quill size, and/or quill location.

In an embodiment, the model input variables include a chemical dosage feed point, and a chemical dosage feed rate of film-forming chemicals, pH adjusting chemicals, and/or passivation or oxidation reduction adjusting chemicals.

As used in this application, the terms "component" and "system" are intended to refer to a computer-related entity, either hardware, a combination of hardware and software, software, or software in execution. For example, a component can be, but is not limited to being, a process running on a processor, a processor, an object, an executable, a thread of execution, a program, and/or a computer. By way of illustration, both an application running on a server and the server can be a component. One or more components can reside within a process and/or thread of execution, and a component can be localized on one computer and/or distributed between two or more computers.

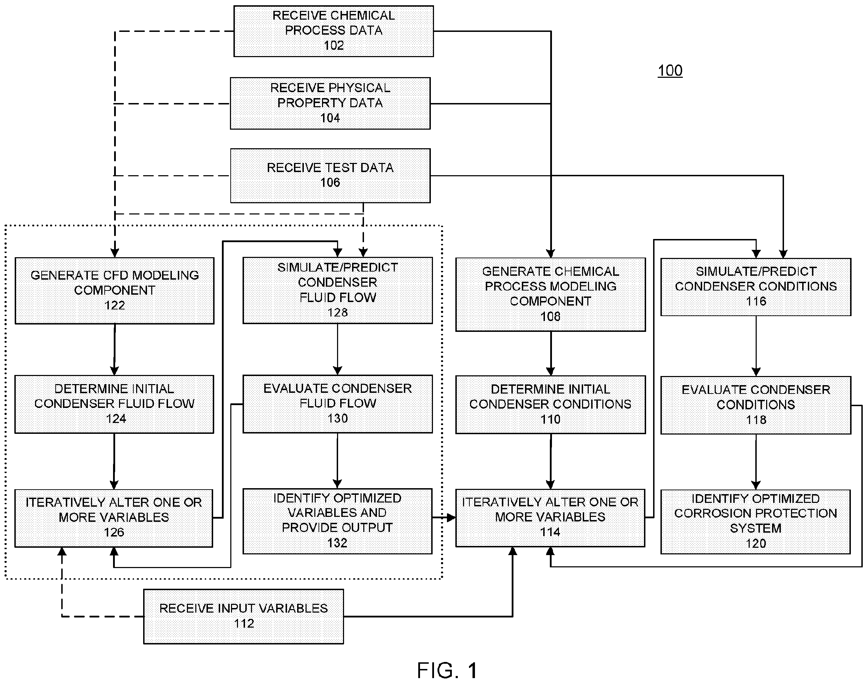

Fig. 1 is a flow diagram of an example method 100 for establishing an optimized corrosion protection system for an air cooled condenser. In an embodiment, chemical process data, physical property data, and test data are received at acts 102, 104, and 106 respectively, and a chemical process modeling component is generated at act 108.

While, for purposes of simplicity of explanation, the one or more methodologies shown herein, e.g., in the form of a flow chart, are shown and described as a series of acts, it is to be understood and appreciated that the subject innovation is not limited by the order of acts, as some acts can, in accordance with the innovation, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation.

In an embodiment, a chemical process modeling component simulates chemical reactions, for example, in terms of deterministic differential equations, e.g., chemical master equation, reaction rate equations, computational algorithms, and a sequence of discrete (particle based) probabilistic models.

In an embodiment, the chemical process modeling component can accept input in the form of test data, for example, data relating to conditions that have been measured or monitored along the length of, and in and around the air cooled condenser. Examples of test data can include corrosion measurements, scale measurements, pressure, temperature, fan usage, fan speed, active condenser area, steam to condensate distribution, and process fluid density, flow rate, velocity, conductivity, pH, alkalinity, acidity, and the like.

In an embodiment, data related to corrosion rates within the air cooled condenser can be monitored, measured, and/or recorded and provided as input to the chemical process modeling component. Corrosion coupons introduced into the air cooled condenser can provide an accurate indication of corrosion rates. Corrosion coupons can be inserted along the length of the air cooled condenser, and data regarding corrosion rates at a number of locations can be recorded.

Corrosion coupons are the standard method for corrosion rate measurement in cooling systems. Small, pre-weighed metal samples are exposed to the cooling water for a specified period of time, generally 30 to 120 days, removed from the system and weighed. The weight loss correlates to a corrosion rate in mils per year (mpy). The corrosion rate as determined by corrosion coupon tests, and other data related to corrosion of the air cooled condenser as determined by other testing, can be provided as input to the chemical process modeling component.

Data related to corrosion rates can also obtained utilizing most any direct and indirect corrosion measure of corrosion, for example, electrochemical corrosion rate meters, monitoring of particulate corrosion product via on-line particle sensors (e.g., laser particle monitors and nephalometers), monitoring of corrosion product (iron) level in the air cooled condenser condensate or process fluid, and coupons associated with the detection of film formation.

The control of pH has been shown to be a significant factor in the majority of corrosion protection systems. In general, depending on the specific metal, metal corrosion rates have a pH range where corrosion is low and can increase significantly when pH is either below or above this ideal range. Operational information and physical data related to the air cooled condenser, e.g., test data and measurements can be provided as input to the chemical process modeling component. For example, process parameters can be monitored, measured, and/or recorded and provided as input to the chemical process modeling component. Data related to the conductivity, pH, alkalinity, and chemical levels of the process fluid can be measured and recorded. In an aspect, pressure or temperature monitoring of the ducts and fluid at selected points within the air cooled condenser, and thermal imaging is used to derive approximate temperatures and leakage paths. Real-time temperature, pressure, fan usage, fan speed, active condenser area, and chemical treatment concentrations can be monitored, measured, and/or recorded and provided as input to the chemical process modeling component.

Still referring to Fig. 1, at act 110 the chemical process modeling component determines the initial chemical process and physical operating conditions of the air cooled condenser. The chemical process modeling component can compute a model response using input data and initial conditions. In an embodiment, the chemical process modeling component receives chemical process condition data, physical property data, and test data as inputs.

In an embodiment, a chemical process modeling component is utilized to establish a corrosion protection system for an air cooled condenser. Chemical process modeling involves knowledge of the properties of the chemicals included in the simulation, as well as the physical properties and characteristics of the components of the physical structure, i.e., the air cooled condenser.

The chemical process modeling component is utilized to gain an understanding of how corrosion is likely to occur over the lifetime of the structure, and to establish an optimized corrosion inhibiting system to protect the air cooled condenser. Chemical process modeling is used to simulate corrosion on a small scale to investigate the fundamental mechanisms involved, and on larger scales to determine how to protect structures from corrosion damage.

The chemical process modeling component can be used to predict areas of the air cooled condenser that are vulnerable to corrosion processes. Corrosion potential and distributions of corrosion processes can be modeled utilizing, for example, equations known in the art, and user-defined equations.

The chemical process modeling component can accept inputs such as initial conditions relating to steam flow, temperatures, chemical treatment, fan usage, fan speed, active condenser area, and process fluid contaminant levels, e.g., corrosion product levels in the process fluid, of the air cooled condenser. In an embodiment, the chemical modeling component dynamically models and predicts the steam and liquid chemistry of the air cooled condenser in terms of steam and liquid phase pH.

In an embodiment, the chemical process modeling component includes a thermodynamic equilibrium modeling component that can model and predict the concentrations of volatile and non-volatile treatment and contaminant species at various points in the system. For example, the chemical modeling component models and predicts the concentrations of volatile and non-volatile treatment and contaminant species in single and two-phase areas where evaporation and/or condensation are occurring.

At act 112, input variables are received by the chemical process modeling component. Input variables can include most any measurable or variable property associated with the air cooled condenser and a corrosion protections system for the air cooled condenser, for example, temperature, pressure, fan usage, fan speed, active condenser area, chemistry, chemical concentration, chemical dosage, chemical surface concentration, chemical dosage timing, chemical dosage injection point, chemical injection delivery device, nozzle type, nozzle size, nozzle location, chemical injection quill type, quill size, and/or quill location, and pH, conductivity, and/or alkalinity of a process fluid of the air cooled condenser.

At act 114, the input variables received at act 112 are iteratively altered, and the resulting changed condition of the air cooled condenser is predicted by the chemical process modeling component at act 116. Iteratively altering the input variables includes iteratively altering the combination of input variables, as well as altering the values associated with the variable. For example, ranges and/or alternatives for temperature, pressure, fan usage, fan speed, active condenser area, chemistry, chemical concentration, chemical dosage, chemical surface concentration chemical dosage timing, chemical dosage injection point, chemical injection delivery device, nozzle type, nozzle size, nozzle location, chemical injection quill type, quill size, and/or quill location, and pH, conductivity, and/or alkalinity of a process fluid are iteratively altered.

In an embodiment, iteratively altering the input variables includes altering physical properties and/or chemical conditions of the air cooled condenser. For example, any of the temperature, pressure, fan usage, fan speed, active condenser area, chemistry, chemical concentration, chemical dosage, chemical surface concentration chemical dosage timing, chemical dosage injection point, chemical injection delivery device, nozzle type, nozzle size, nozzle location, chemical injection quill type, quill size, and/or quill location, and pH, conductivity of the process fluid, and combinations thereof, can be altered at the air cooled condenser.

Test data associated with the altered physical properties and/or chemical conditions of the air cooled condenser is received at act 106, and utilized at act 116. The resulting changed condition of the air cooled condenser is simulated by the chemical process modeling component at act 116.

In an embodiment, an evaluation 118 is completed each time a physical property or chemical condition is altered. The evaluation 118 produces an output which is provided as feedback to the act 114. In an embodiment, the evaluation completed at act 118 takes into account the initial condenser conditions determined at act 110.

In further embodiments, an optimized corrosion protection system is identified by iteratively altering or modifying, directly at the condenser and/or via an input variable, at least one of a chemistry composition, feed rate, amount, chemical delivery system, injection point, and/or timing of chemical treatment.

In an embodiment, corrosion can be controlled by maintaining a physical property or chemical process condition of the air cooled condenser (e.g., temperature, pressure, fan usage, fan speed, active condenser area, pH, chemical treatment), within a previously determined range or limit. The variables can be used to predict and evaluate changes in corrosion patterns as the limits are exceeded. In an embodiment, a monitored variable, or combination of variables, can be used to control chemical addition directly through automatic feed systems. In an embodiment, system measurements can be monitored and corrective action taken when a variable is not within a pre-determined range.

The effect of the combinations of input variables, and the values of the input variables, are evaluated at act 118. In an embodiment, an evaluation 118 is completed each time an input variable is altered. Each evaluation 118 produces an output which is provided as feedback to the act 114. In an embodiment, the evaluation completed at act 118 takes into account the initial condenser conditions determined at act 110.

In an embodiment, an optimized corrosion protection system is established through implementation (e.g., altering at least one physical property and/or chemical condition) and direct measurement (e.g., receiving test data associated with the altered property or condition) of the air cooled condenser operating conditions, utilizing, for example, a simulation and an evaluation of the altered or modified properties and conditions, e.g., chemistry dosage, chemical feed rate, chemical feed point, and/or timing for the application of film-forming chemicals, pH adjusting chemicals, and/or passivation or oxidation reduction adjusting chemicals, and other physical properties and/or chemical conditions of the air cooled condenser.

In an embodiment, an optimized corrosion protection system is established prior to implementation through predictive model evaluation and modification via model input variables of physical properties and/or chemical conditions, e.g., the chemistry dosage, chemical feed rate, chemical feed point, and/or timing for the application of film-forming chemicals, pH adjusting chemicals, and/or passivation or oxidation reduction adjusting chemicals, and other physical properties and/or chemical conditions of the air cooled condenser.

At act 120, an optimized corrosion protection system is identified based on the evaluations completed at act 118. An example corrosion protection system includes an optimized combination of chemistry, chemistry dosage or feed, chemical feed rate, chemical feed point, e.g., chemical injection location, and timing for the chemical feed, for a particular air cooled condenser structure. The corrosion protection system can be optimized by iteratively altering and evaluating a number of input variables under a variety of simulated operating conditions.

In an embodiment, the corrosion protection system includes an optimized chemical dosage feed point, and a chemical dosage federate of film-forming chemicals, pH adjusting chemical, and/or passivation or oxidation reduction adjusting chemicals.

The chemical reactions and phenomena unique to corrosion processes, such as the change of the shape of a metal surface due to corrosion, can also be modeled and interpreted.

In an embodiment, the chemical process modeling component is utilized to determine an optimal corrosion inhibiting chemical treatment dosage for an air cooled condenser. The chemical treatment can include film-forming chemicals, passivating agents, reduction/oxidation potential modifiers, and/or pH adjusting chemicals, and the like.

In aspects, the chemical process modeling component can provide data that informs a corrosion protection system, for example, an optimal treatment dosage, feed point, timing, and chemistry for introduction into the air cooled condenser. In an embodiment, the optimal treatment dosage, feed point, timing, and chemistry for introduction into the air cooled condenser can be utilized to maximize the coverage of film forming chemicals on the internal surfaces of the air cooled condenser, and to achieve a desired pH of the process fluid.

In an embodiment, the corrosion protection chemistry includes at least one of film-forming chemicals, passivating agents, reduction/oxidation potential modifiers, and/or pH adjusting chemicals, oxygen scavengers, and combinations thereof. Surface or filming corrosion inhibitors can include but are not limited to octadecylamine, oleyl diamine, oleyl amine, ethoxylated oleic acid, lecithin, and combinations thereof. Passivating agents can include, but are not limited to, N,N-diethylhydroxylamine, isopropylhydroxylamine, and combination thereof. Dissolved oxygen scavengers can include, but are not limited to, hydrazine, carbohydrazide, hydroquinone, ascorbic acid, and combinations thereof. Alkalizers, or pH adjusting chemicals, can include but are not limited to ammonia, cyclohexylamine, monoethanolamine, morpholine, and combinations thereof.

In an embodiment, the chemical process modeling component is configured to accept input from other systems and components. For example, the chemical process modeling component can optionally accept input from a computational fluid dynamic computer modeling component.

Computational fluid dynamic computer modeling, also referred to as computational fluid dynamics (CFD), uses physics, applied mathematics, and computational software to simulate fluid flow. Computational fluid dynamics can be used to model fluid flow, and to analyze thermal properties in a process. CFD is largely based on numerical methods and algorithms, for example, the Navier-Stokes equations and other governing equations, which describe how the velocity, pressure, temperature, and density of a moving fluid are related. In an embodiment, computers are employed to solve approximations to the equations using a variety of techniques such as finite difference, finite volume, finite element, spectral methods, and the like.

CFD can be used to predict or simulate the fluid flow, vapor phase changes, temperature fields, vapor liquid distillate, and steam to condensate distribution within an air cooled condenser, or more generally, within most any structure or bounded domain. The output of the computational fluid dynamic computer modeling can be provided as an input to the chemical process modeling component discussed in detail above.

Computational fluid dynamic computer modeling is used to solve the fundamental equations for gas or liquid flow in a defined space, and makes use of analysis software running on computing hardware to evaluate a fluid flow. Solving the governing equations for a particular set of boundary conditions associated with a physical structure, such as inlets, outlets, tubes, ducts, fins, walls and surface areas, can be used to predict a fluid velocity and pressure in a given geometry. For example, computational fluid dynamic computer modeling can provide a model, simulations and/or predictions, of convection, particulate flows, heat transfer, mass transfer, chemical reactions, and other flow related phenomena that will occur when fluids interact under specified conditions.

Computational fluid dynamics can also provide simulations and predictions related to multi-phase flows such as two phase flows, e.g., gas-liquid, gas-solid, liquid-liquid, and liquid-solid flows, and three phase flows, e.g., gas-liquid-solid, gas-liquid-liquid, and solid-liquid-liquid flows.

A CFD modeling component can be used, for example, to simulate and predict the interaction of injected fluids with other liquids or vapors, and to determine the heat transfer, mass transfer, chemical reactions, and other flow related phenomena that are expected to occur when the fluids interact under specific conditions.

The CFD modeling component can be used to identify unanticipated interactions, and to optimize a set of operating conditions prior to implementation. The CFD modeling component can be used to evaluate and validate numerous alternative corrosion protection designs that would impractical, or impossible, to implement and test using traditional testing methods.

Still referring to Fig. 1, in an embodiment, chemical process data 102, physical property data 104 and test data 106 are received, and a computational fluid dynamics modeling component is generated at act 122. Chemical process data, physical property data, and test data can be provided as inputs to the computational fluid dynamics modeling component. In an embodiment, the inputs used to generate the chemical process modeling component and the computational fluid dynamics modeling component can be the same or similar. For example, the chemical process data, physical property data, and test data can be applicable to both the chemical process modeling component and the CFD modeling component. In other embodiments, different chemical process data, physical property data, and test data are provided to each of the chemical process modeling component and the computational fluid dynamics modeling component as is appropriate.

A CFD modeling component is generated based on, for example, the physical structure of the air cooled condenser, and optionally chemical process data associated with the air cooled condenser. A three dimensional model of the air cooled condenser can be established, for example, through the use of computer aided drafting (CAD) tools. A computer aided drafting representation is used to create a volume flow domain within the internal space of the structure, i.e., the air cooled condenser. A computational mesh is then created in the flow domain. The mesh can be created by dividing the volume flow domain into many small volumes over which the governing equations are solved.

In an embodiment, a computational fluid dynamics modeling component can be generated using the geometry of the particular air cooled condenser to be protected. A computer aided drafting representation is used to create a volume flow domain within the internal space of the air cooled condenser containing the fluid flow of interest, and the computational mesh is created.

At act 122, the CFD modeling component determines the initial fluid flow conditions of the air cooled condenser. The CFD modeling component can compute a model response using input data and initial conditions. In an embodiment, the computational fluid dynamics modeling component receives chemical process, physical property data, and test data as inputs. The chemical process, physical property data, and test data are related to the air cooled condenser and can be the same as, or may be different from, the chemical process, physical property data, and test data received as inputs by the chemical process modeling component at acts 102, 104, and 106.

Test data in the form of a corrosion rate as determined by corrosion coupon tests, and other data related to corrosion of the air cooled condenser as determined by other testing, can be provided as input to the CFD modeling component at act 106.

Once the computational fluid dynamics modeling component has been generated at act 122, the governing equations are solved on the computational mesh using, for example, analysis software. Physical property data, for example, flow rates, temperatures at selected points, fluid flows at inlets and outlets, ambient wind, temperature conditions, fan usage, fan speed, active condenser area, and the like, can be provided as input to the model.

Chemical delivery device type, injection points, and injection methods for corrosion inhibiting chemicals can be included. For example, a variety of potential chemical injection nozzle types and sizes, injection quill types and sizes, and placement of the nozzles and/or quills, e.g., injection or feed points, within the air cooled condenser can be utilized, and the effect on the corrosion protection system can be determined. In an embodiment, placement of steam driven injection quills can be simulated and optimal injection points can be identified.

In an embodiment, data related to the physical characteristics of a number of chemical treatment delivery systems can be provided as input to the CFD modeling component. For example, a chemical treatment delivery system can include an injector comprising one or more spray nozzles on a pipe. The injector delivers a specific volume of fluid at a specified pressure drop. The spray nozzle converts fluid into a predictable drop size spectrum, and provides specific spray characteristics.

The use of spray nozzles allows some control over the distribution of the injected liquid into the receiving process fluid, as compared to the use of a quill. In embodiments, the injector can include a connection to a carrier gas line. A carrier gas can be used to pressurize the delivery of the injected liquid. The carrier gas can include, for example, nitrogen, helium, argon, hydrogen, and other inert gases.

In an embodiment, a chemical treatment delivery system can include a quill comprising a pipe with slots or holes. An injected fluid flow through the quill is uninhibited, and the receiving process stream breaks up, and mixes the injected fluid. A high pressure injection quill can be used to inject chemicals pumped by metering pumps into turbulent flow zones of high pressure water or steam of the air cooled condenser.

At act 112, input variables are received by the CFD modeling component. Input variables can include most any measurable or variable property associated with the air cooled condenser, for example, temperature, pressure, fan usage, fan speed, active condenser area, chemistry, chemical concentration, chemical dosage, chemical surface concentration, chemical dosage timing, chemical dosage injection point, chemical injection delivery device, nozzle type, nozzle size, nozzle location, chemical injection quill type, quill size, and/or quill location, and pH, conductivity, and/or alkalinity of a process fluid of the air cooled condenser.

At act 126, the input variables received at act 112 are iteratively altered, and the resulting changed fluid flow of the air cooled condenser simulated by the CFD process modeling component at act 128. Iteratively altering the input variables can include iteratively altering the combination of input variables, as well as altering the values associated with the particular variable. For example, ranges and/or alternatives for temperature, pressure, fan usage, fan speed, active condenser area, chemistry, chemical concentration, chemical dosage, chemical surface concentration, chemical dosage timing, chemical dosage injection point, chemical injection delivery device, nozzle type, nozzle size, nozzle location, chemical injection quill type, quill size, and/or quill location, and pH, conductivity, and/or alkalinity of a process fluid are iteratively altered.

The effect of the combinations of input variables, and the values of the input variables, are evaluated at act 130. In an embodiment, an evaluation 130 is completed each time an input variable is altered. Each evaluation 130 produces an output which is provided as feedback to the act 126. In an embodiment, the evaluation completed at act 130 takes into account the initial condenser conditions determined at 124.

At act 132, an optimized combination of input variables and input variable values are identified based on the evaluations completed at act 130. The identified combination of input variables and input variable values are provided as input to the chemical process modeling component at act 114. At act 114, the chemical process modeling component can accept input from the CFD modeling component.

In further embodiments, the CFD modeling component produces an output in the form of data. The CFD modeling component output can include graphics which can be viewed and interpreted with the use of visualization tools. The generated data can include, for example, totals and averages of fluid flows and temperatures at key locations within the air cooled condenser. In an embodiment, the CFD modeling component output produced at act 132 is used as input to the chemical process modeling component at act 114.

The optimized combination of input variables and input variable values provided by the CFD modeling component are evaluated at act 118, along with the iteratively altered input variables, and the resulting changed conditions of the air cooled condenser simulated by the chemical process modeling component at act 116. Examples of optimized combinations of variables include chemistry, chemistry dosage or feed, location and timing for the chemical feed, for a particular air cooled condenser structure. The variables and variable values can be optimized by iteratively altering and evaluating a number of input variables under a variety of simulated operating conditions.

The CFD modeling component can utilize chemical delivery system information and data, together with other input data, e.g., the geometry of the air cooled condenser and other data, to identify optimal chemical treatment injection points and delivery systems.

The CFD software utilizes information about the size, content and layout of the air cooled condenser, and other input data, e.g., physical property data, chemical process data and/or test data, to create a three-dimensional mathematical model on a grid that can be rotated and viewed from different angles.

Computational fluid dynamics modeling can help identify areas where corrosion inhibiting chemicals are not reaching, fluids are mixing, or are failing to mix, and where chemicals, i.e., corrosion inhibiting products, can most efficiently be applied, or injected into the process for maximum benefit. Data related to the transport of corrosive and corroded material within the air cooled condenser is acquired through the dynamic modeling of changes in corroding surfaces and the properties of the substances in contact with the surfaces.

By altering the types and combinations of input variables, and/or the variable values, a user can demonstrate how fluid will flow through the air-cooled condenser cooling infrastructure under a wide variety of conditions. The information can be used to optimize the corrosion protection of the cooling infrastructure, and to predict the effectiveness of a vast number of alternate corrosion protection strategies. For example, the CFD output data can be utilized to predict the effectiveness of a particular placement, introduction or application point of a chosen chemistry, to optimize the efficiency of the cooling infrastructure, and to optimize the timing and/or chemistry of a particular combination of corrosion protection approaches. The CFD modeling component output data, e.g., an optimized combination of input variables, can be utilized as input to the chemical process modeling component.

In an embodiment, the disclosed method provides an optimized corrosion protection system identified by iteratively modifying at least one of a chemistry composition, feed rate, amount, chemical delivery system, injection point, and/or timing of chemical treatment.

In an embodiment, the CFD model component is utilized to simulate a changed fluid flow of the air cooled condenser based on test data associated with one or more altered air cooled condenser properties, and to identify an optimized combination of properties based on an evaluation of the changed fluid flow.

In an embodiment, the CFD model component is utilized to predict a changed fluid flow of the air cooled condenser by iteratively altering at least one model input variable, and to identify an optimized combination of input variables based on an evaluation of the changed fluid flow.

When used in the predictive mode, for example, the computational fluid dynamics model provides a cost effective tool for evaluating and comparing alternative corrosion protection strategies without material, construction, and testing costs. The CFD models can also provide more detailed information on a much larger scale than is practical with conventional experimental testing. The disclosed method provides an enhanced corrosion protection system by optimizing a corrosion protection system through computer predictions, for example, utilizing a chemical process modeling component, system measurements, and computational fluid dynamics.

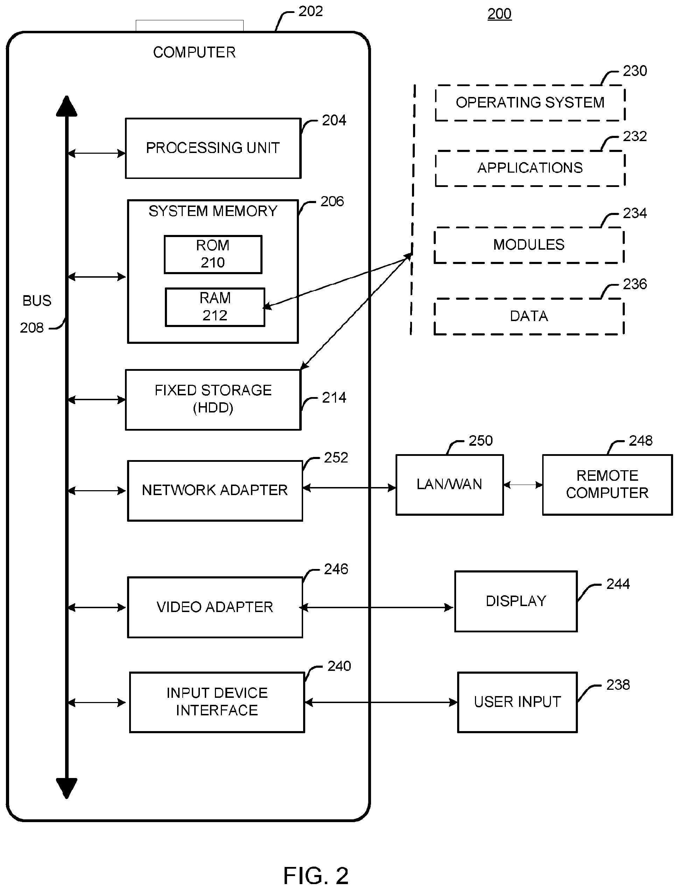

FIG. 2 and the following discussion provide a brief, general description of a suitable computing environment 200 in which the various aspects of the innovation can be implemented. While aspects of the innovation have been described in the general context of computer-executable instructions that can run on one or more computers, those skilled in the art will recognize that the innovation also can be implemented in combination with other program modules or components and/or as a combination of hardware and software. Generally, program modules include routines, programs, components, data structures, etc., that perform particular tasks or implement particular abstract data types. Moreover, the inventive methods can be practiced with other computer system configurations, including single-processor or multiprocessor computer systems, minicomputers, mainframe computers, as well as personal computers, hand-held computing devices, microprocessor-based or programmable consumer electronics, and the like, each of which can be operatively coupled to one or more associated devices.

Aspects of the innovation can also be practiced in distributed computing environments where certain tasks are performed by remote processing devices that are linked through a communications network. In a distributed computing environment, program modules can be located in both local and remote memory storage devices. A computer typically includes a variety of computer-readable media. Computer-readable media can be most any available media that can be accessed by the computer and includes both volatile and nonvolatile media, removable and non-removable media. By way of example, and not limitation, computer-readable media can comprise computer storage media and communication media.

Computer storage media includes volatile and nonvolatile, removable and non-removable media implemented in most any method or technology for storage of information such as computer-readable instructions, data structures, program modules or other data. Computer storage media includes, but is not limited to, RAM, ROM, EEPROM, flash memory, and/or other memory technology, CD-ROM, digital versatile disk (DVD), or other optical disk storage, or most any other medium which can be used to store the desired information and which can be accessed by the computer. Combinations of the any of the above are also included within the scope of computer-readable media.

Communication media typically embodies the physical structure that carries a data transmission. By way of example, and not limitation, communication media includes wired media such as a wired network or direct-wired connection, and wireless media such as acoustic, RF, infrared, and other wireless media. With continued reference to FIG. 2, the exemplary environment 200 for implementing aspects of the disclosed innovation includes a computer 202, the computer 202 including a processing unit 204, a system memory 206, and a system bus 208. The system bus 208 couples system components including, but not limited to, the system memory 206 to the processing unit 204. The processing unit 204 can be any of various commercially available processors. Dual microprocessors and other multi-processor architectures can also be employed as the processing unit 204.

The system bus 208 can be any of several types of bus structure that can further interconnect to a memory bus, with or without a memory controller, a peripheral bus, and a local bus using any of a variety of commercially available bus architectures. The system memory 206 includes read-only memory (ROM) 210 and random access memory (RAM) 212.

The computer 202 can include an internal hard disk drive (HDD) 214 (e.g., EIDE, SATA), and/or an internal solid-state drive (SSD). The hard disk drive (HDD) 214 can be integral with the computer 202 or can be separate and accessed through other interfaces. The hard disk drive 214 can be connected to the system bus 208 via an appropriate interface, for example, a hard disk drive interface. The interface for external drive implementations can include at least one or both of Universal Serial Bus (USB) and IEEE 1394 interface technologies. Other external drive connection technologies are within contemplation of the subject innovation.

The drives and their associated computer-readable media provide nonvolatile storage of data, data structures, computer-executable instructions, and so forth. For the computer 202, the drives and media accommodate the storage of any data in a suitable digital format. Although the description of computer-readable media above refers to a HDD, a solid-state drive (SSD), or a removable optical media such as a DVD, other types of media which are readable by a computer, such as zip drives, flash memory, and the like, can also be used in the exemplary operating environment, and further, that any such media can contain computer-executable instructions for performing the methods of the innovation.

A number of program modules can be stored in the drives and RAM 212, including an operating system 230, one or more application programs 232, other program modules 234 and program data 236. All or portions of the operating system, applications, modules, and/or data can also be cached in the RAM 212. The innovation can be implemented with various commercially available operating systems or combinations of operating systems.

A user can enter commands and information into the computer 202 through one or more wired/wireless input devices 238, e.g., a keyboard or pointing device, such as a mouse. These and other input devices are often connected to the processing unit 204 through an input device interface 240 that is coupled to the system bus 208, but can be connected by other interfaces, such as a parallel port, an IEEE 1394 serial port, a game port, a USB port, an IR interface, etc. A monitor 244 or other type of display device is also connected to the system bus 208 via an appropriate interface, such as a video adapter 246.

Many other devices or components (not shown) can be connected in a similar manner via appropriate interface modules (e.g., document scanners, digital cameras and so on). Conversely, all of the components shown in FIG. 2 need not be present to practice the present disclosure. The components can be interconnected in different ways from that shown. The operation of a computing environment 200 such as that shown in FIG. 2 is readily known in the art and is not discussed in detail herein.

The computer 202 can operate in a networked environment using logical connections via wired and/or wireless communications to one or more remote computers, such as a remote computer 248 connected to the processing unit 204 through a network adapter 252 that is coupled to the system bus 208. The remote computer 248 can be a workstation, a server computer, a router, a personal computer, portable computer, microprocessor-based entertainment appliance, a peer device or other network node, and typically includes many or all of the elements described relative to the computer 202. The logical connections depicted include wired/wireless connectivity to a local area network (LAN) 250 and/or larger networks, e.g., a wide area network (WAN). Such LAN and WAN networking environments facilitate enterprise-wide computer networks, such as intranets, all of which can connect to a global communications network, e.g., the Internet.

While this invention has been described in conjunction with the specific embodiments described above, it is evident that many alternatives, combinations, modifications, and variations are apparent to those skilled in the art. Accordingly, the specific embodiments of this invention, as set forth above, are intended to be illustrative only, and should not be construed in a limiting sense.

Therefore, the technical scope of the present invention encompasses not only those embodiments described above, but also all that fall within the scope of the appended claims.

## Claims

1. A computer implemented method for establishing a corrosion protection system for an air cooled condenser, comprising:
utilizing one or more processors and associated memory storing one or more programs for execution by the one or more processors, the one or more programs including instructions for:
receiving data associated with at least one physical property of the air cooled condenser;
receiving data associated with at least one chemical process condition of the air cooled condenser;
generating a chemical process modeling component based on the received data;
simulating an initial condition of the air cooled condenser utilizing the chemical process modeling component;
altering at least one physical property and/or at least one chemical process condition of the air cooled condenser;
receiving test data associated with the altered physical property and/or chemical process condition;
simulating a changed condition of the air cooled condenser based on the test data; and
identifying an optimized corrosion protection system based on an evaluation of the changed condition.

2. The computer implemented method for establishing a corrosion protection system for an air cooled condenser of claim 1, wherein the test data comprises a measurement of at least one of a corrosion rate, corrosion location, corrosion activity, ambient temperature, internal temperature, fan usage, fan speed, active condenser area, flow rate, pressure, chemical concentration, chemical dosage, chemical surface concentration chemical dosage timing, and/or chemical injection point associated with the air cooled condenser.

3. The computer implemented method for establishing a corrosion protection system for an air cooled condenser of claims 1 or 2, wherein the test data comprises a measurement of at least one of a pH, conductivity, oxidation-reduction potential, and/or alkalinity of a process fluid associated with the air cooled condenser.

4. The computer implemented method for establishing a corrosion protection system for an air cooled condenser of any of the preceding claims, wherein the chemical process condition of the air cooled condenser comprises at least one of a measurement of a corrosion rate, corrosion activity, chemical level, chemical concentration, and/or a pH, conductivity, oxidation-reduction potential, and/or alkalinity of a process fluid associated with the air cooled condenser.

5. The computer implemented method for establishing a corrosion protection system for an air cooled condenser of any of the preceding claims, wherein the physical property of the air cooled condenser comprises at least one of pressure, temperature, fan usage, fan speed, active condenser area, flow rate, and/or three dimensional computer assisted drafting data associated with the physical structure of the air cooled condenser.

6. The computer implemented method for establishing a corrosion protection system for an air cooled condenser of any of the preceding claims, wherein altering at least one physical property and/or at least one chemical process condition of the air cooled condenser comprises altering at least one a pH, conductivity, chemistry, chemical concentration, chemical dosage, oxidation-reduction potential, and/or alkalinity of a process fluid associated with the air cooled condenser and/or at least one of a temperature, pressure, fan usage, fan speed, active condenser area, flow rate, chemical dosage timing, chemical dosage injection point, chemical injection nozzle type, nozzle size, nozzle location, chemical injection quill type, quill size, and/or quill location.

7. The computer implemented method for establishing a corrosion protection system for an air cooled condenser of any of the preceding claims, wherein identifying an optimized corrosion protection system comprises selecting a combination of two or more of a chemistry, chemical delivery device, chemical delivery location and/or chemical delivery timing.

8. The computer implemented method for establishing a corrosion protection system for an air cooled condenser of claim 7, wherein the chemistry comprises at least one of film-forming chemicals, passivating agents, reduction/oxidation potential modifiers, and/or pH adjusting chemicals, oxygen scavengers and combinations thereof.

9. A computer implemented method for establishing a corrosion protection system for an air cooled condenser, comprising:
utilizing one or more processors and associated memory storing one or more programs for execution by the one or more processors, the one or more programs including instructions for:
receiving data associated with at least one physical property of the air cooled condenser;
receiving data associated with at least one chemical process condition of the air cooled condenser;
generating a chemical process modeling component based on the received data;
simulating an initial condition of the air cooled condenser utilizing the chemical process modeling component;
predicting a changed condition of the air cooled condenser by iteratively altering at least one chemical process model input variable; and
identifying an optimized corrosion protection system based on an evaluation of the changed condition.

10. The computer implemented method for establishing a corrosion protection system for an air cooled condenser of claim 9, comprising receiving test data associated with at least one physical property or at least one chemical property of the air cooled condenser.

11. The computer implemented method for establishing a corrosion protection system for an air cooled condenser of claims 9 or 10, wherein the chemical process model input variable comprises at least one a pH, conductivity, chemistry, chemical concentration, chemical dosage, oxidation-reduction potential, and/or alkalinity of a process fluid associated with the air cooled condenser, and/or at least one of a temperature, pressure, fan usage, fan speed, active condenser area, flow rate, chemical dosage timing, chemical dosage injection point, chemical injection nozzle type, nozzle size, nozzle location, chemical injection quill type, quill size, and/or quill location.

12. The computer implemented method for establishing a corrosion protection system for an air cooled condenser of any of claims 8-11, wherein identifying an optimized corrosion protection system comprises selecting a combination of two or more of a chemistry, chemical delivery device, chemical delivery location and/or chemical delivery timing.

13. The computer implemented method for establishing a corrosion protection system for an air cooled condenser of claim 12, wherein the chemistry comprises at least one of film-forming chemicals, passivating agents, reduction/oxidation potential modifiers, and/or pH adjusting chemicals, oxygen scavengers and combinations thereof.

14. The computer implemented method for establishing a corrosion protection system for an air cooled condenser of any of the preceding claims, comprising:
generating a computational fluid dynamics (CFD) modeling component based on the received physical property and chemical process condition data;
determining an initial fluid flow associated with the air cooled condenser utilizing the CFD model component;
simulating a changed fluid flow of the air cooled condenser by iteratively altering at least one CFD model input variable;
identifying an optimized combination of input variables based on an evaluation of the changed fluid flow; and
providing the optimized combination of input variables to the chemical process modeling component as a chemical process model input.

15. The computer implemented method for establishing a corrosion protection system for an air cooled condenser of claim 14, wherein the optimized combination of input variables provided to the chemical process modeling component as a chemical process model input comprises at least one of a temperature, pressure, fan usage, fan speed, active condenser area, flow rate, chemistry, chemical concentration, chemical dosage, chemical surface concentration, chemical dosage timing, chemical dosage injection point, chemical injection delivery device type, chemical injection nozzle type, nozzle size, nozzle location, chemical injection quill type, quill size, quill location, and/or a pH, conductivity, oxidation-reduction potential, and alkalinity of a process fluid associated with the air cooled condenser.

## Patentansprüche

1. Computerimplementiertes Verfahren zum Einrichten eines Korrosionsschutzsystems für einen luftgekühlten Kondensator, umfassend:
Verwenden eines oder mehrerer Prozessoren und eines assoziierten Speichers, der ein oder mehrere Programme zur Ausführung durch den einen oder die mehreren Prozessoren speichert, wobei das eine oder die mehreren Programme Anweisungen einschließen zum:
Empfangen von Daten, die mit mindestens einer physikalischen Eigenschaft des luftgekühlten Kondensators assoziiert sind;
Empfangen von Daten, die mit mindestens einem chemischen Prozesszustand des luftgekühlten Kondensators assoziiert sind;
Erzeugen einer Modellierungskomponente für chemische Prozesse auf der Grundlage der empfangenen Daten;
Simulieren eines Anfangszustands des luftgekühlten Kondensators unter Verwendung der Modellierungskomponente für chemische Prozesse;
Ändern mindestens einer physikalischen Eigenschaft und/oder mindestens eines chemischen Prozesszustands des luftgekühlten Kondensators;
Empfangen von Testdaten, die mit der bzw. dem geänderten physikalischen Eigenschaft und/oder chemischen Prozesszustand assoziiert sind;
Simulieren eines geänderten Zustands des luftgekühlten Kondensators auf der Grundlage der Testdaten; und
Identifizieren eines optimierten Korrosionsschutzsystems auf der Grundlage einer Bewertung des geänderten Zustands.

2. Computerimplementiertes Verfahren zum Einrichten eines Korrosionsschutzsystems für einen luftgekühlten Kondensator nach Anspruch 1, wobei die Testdaten einen Messwert von mindestens einem von Folgendem umfassen, das mit dem luftgekühlten Kondensator assoziiert ist: Korrosionsrate, Korrosionsort, Korrosionsaktivität, Umgebungstemperatur, Innentemperatur, Gebläsenutzung, Gebläsedrehzahl, aktive Kondensatorfläche, Durchflussrate, Druck, Chemikalienkonzentration, Chemikaliendosierung, Chemikalienoberflächenkonzentration, Zeitpunkt der Chemikaliendosierung und/oder Chemikalien-Einspritzpunkt.

3. Computerimplementiertes Verfahren zum Einrichten eines Korrosionsschutzsystems für einen luftgekühlten Kondensator nach Anspruch 1 oder 2, wobei die Testdaten einen Messwert von mindestens einem von Folgendem umfassen: pH-Wert, Leitfähigkeit, Redoxpotenzial und/oder Alkalinität eines mit dem luftgekühlten Kondensator assoziierten Prozessfluids.

4. Computerimplementiertes Verfahren zum Einrichten eines Korrosionsschutzsystems für einen luftgekühlten Kondensator nach einem der vorhergehenden Ansprüche, wobei der chemische Prozesszustand des luftgekühlten Kondensators mindestens eines von Folgendem umfasst: ein Messwert einer Korrosionsrate, Korrosionsaktivität, Chemikalienpegel, Chemikalienkonzentration und/oder pH-Wert, Leitfähigkeit, Redoxpotenzial und/oder Alkalinität eines mit dem luftgekühlten Kondensator assoziierten Prozessfluids.

5. Computerimplementiertes Verfahren zum Einrichten eines Korrosionsschutzsystems für einen luftgekühlten Kondensator nach einem der vorhergehenden Ansprüche, wobei die physikalische Eigenschaft des luftgekühlten Kondensators mindestens eines von Folgendem umfasst: Druck, Temperatur, Gebläsenutzung, Gebläsedrehzahl, aktive Kondensatorfläche, Durchflussrate und/oder Daten zum dreidimensionalen computergestützten Konstruieren, die mit der physikalischen Struktur des luftgekühlten Kondensators assoziiert sind.

6. Computerimplementiertes Verfahren zum Einrichten eines Korrosionsschutzsystems für einen luftgekühlten Kondensator nach einem der vorhergehenden Ansprüche, wobei das Ändern mindestens einer physikalischen Eigenschaft und/oder mindestens eines chemischen Prozesszustands des luftgekühlten Kondensators das Ändern von mindestens einem von Folgendem umfasst: pH-Wert, Leitfähigkeit, chemische Zusammensetzung, Chemikalienkonzentration, Chemikaliendosierung, Redoxpotenzial und/oder Alkalinität eines mit dem luftgekühlten Kondensator assoziierten Prozessfluids, und/oder mindestens von einem von Folgendem: Temperatur, Druck, Gebläsenutzung, Gebläsedrehzahl, aktive Kondensatorfläche, Durchflussrate, Zeitpunkt der Chemikaliendosierung, Einspritzpunkt der Chemikaliendosierung, Typ der Chemikalieninjektionsdüse, Düsengröße, Düsenposition, Typ des Chemikalieninjektors, Injektorgröße und/oder Injektorposition.

7. Computerimplementiertes Verfahren zum Einrichten eines Korrosionsschutzsystems für einen luftgekühlten Kondensator nach einem der vorhergehenden Ansprüche, wobei das Identifizieren eines optimierten Korrosionsschutzsystems das Auswählen einer Kombination aus zwei oder mehr von Folgendem umfasst: chemische Zusammensetzung, Vorrichtung zur Chemikalienzugabe, Ort der Chemikalienzugabe und/oder Zeitpunkt der Chemikalienzugabe.

8. Computerimplementiertes Verfahren zum Einrichten eines Korrosionsschutzsystems für einen luftgekühlten Kondensator nach Anspruch 7, wobei die chemische Zusammensetzung mindestens eines von Folgendem umfasst: filmbildende Chemikalien, Passivierungsmittel, Redoxpotenzial-Modifikatoren und/oder pHeinstellende Chemikalien, Sauerstofffänger und Kombinationen davon.

9. Computerimplementiertes Verfahren zum Einrichten eines Korrosionsschutzsystems für einen luftgekühlten Kondensator, umfassend:
Verwenden eines oder mehrerer Prozessoren und eines assoziierten Speichers, der ein oder mehrere Programme zur Ausführung durch den einen oder die mehreren Prozessoren speichert, wobei das eine oder die mehreren Programme Anweisungen einschließen zum:
Empfangen von Daten, die mit mindestens einer physikalischen Eigenschaft des luftgekühlten Kondensators assoziiert sind;
Empfangen von Daten, die mit mindestens einem chemischen Prozesszustand des luftgekühlten Kondensators assoziiert sind;
Erzeugen einer Modellierungskomponente für chemische Prozesse auf der Grundlage der empfangenen Daten;
Simulieren eines Anfangszustands des luftgekühlten Kondensators unter Verwendung der Modellierungskomponente für chemische Prozesse;
Vorhersagen eines geänderten Zustands des luftgekühlten Kondensators durch iteratives Ändern mindestens einer Eingangsvariablen des chemischen Prozessmodells; und
Identifizieren eines optimierten Korrosionsschutzsystems auf der Grundlage einer Bewertung des geänderten Zustands.

10. Computerimplementiertes Verfahren zum Einrichten eines Korrosionsschutzsystems für einen luftgekühlten Kondensator nach Anspruch 9, umfassend: Empfangen von Testdaten, die mit mindestens einer physikalischen Eigenschaft oder mindestens einer chemischen Eigenschaft des luftgekühlten Kondensators assoziiert sind.

11. Computerimplementiertes Verfahren zum Einrichten eines Korrosionsschutzsystems für einen luftgekühlten Kondensator nach Anspruch 9 oder 10, wobei die Eingangsvariable des chemischen Prozessmodells mindestens eines von Folgendem umfasst: pH-Wert, Leitfähigkeit, chemische Zusammensetzung, Chemikalienkonzentration, Chemikaliendosierung, Redoxpotenzial und/oder Alkalinität eines mit dem luftgekühlten Kondensator assoziierten Prozessfluids, und/oder mindestens eines von Folgendem: Temperatur, Druck, Gebläsenutzung, Gebläsedrehzahl, aktive Kondensatorfläche, Durchflussrate, Zeitpunkt der Chemikaliendosierung, Einspritzpunkt der Chemikaliendosierung, Typ der Chemikalieninjektionsdüse, Düsengröße, Düsenposition, Typ des Chemikalieninjektors, Injektorgröße und/oder Injektorposition.

12. Computerimplementiertes Verfahren zum Einrichten eines Korrosionsschutzsystems für einen luftgekühlten Kondensator nach einem der Ansprüche 8 bis 11, wobei das Identifizieren eines optimierten Korrosionsschutzsystems das Auswählen einer Kombination aus zwei oder mehr von Folgendem umfasst: chemische Zusammensetzung, Vorrichtung zur Chemikalienzugabe, Ort der Chemikalienzugabe und/oder Zeitpunkt der Chemikalienzugabe.

13. Computerimplementiertes Verfahren zum Einrichten eines Korrosionsschutzsystems für einen luftgekühlten Kondensator nach Anspruch 12, wobei die chemische Zusammensetzung mindestens eines von Folgendem umfasst: filmbildende Chemikalien, Passivierungsmittel, Redoxpotenzial-Modifikatoren und/oder pHeinstellende Chemikalien, Sauerstofffänger und Kombinationen davon.

14. Computerimplementiertes Verfahren zum Einrichten eines Korrosionsschutzsystems für einen luftgekühlten Kondensator nach einem der vorhergehenden Ansprüche, umfassend:
Erzeugen einer Modellierungskomponente für Numerische Strömungsmechanik (CFD) auf der Grundlage der empfangenen Daten über physikalische Eigenschaft und den chemischen Prozesszustand;
Bestimmen eines anfänglichen Fluiddurchflusses, der mit dem luftgekühlten Kondensator assoziiert ist, unter Verwendung der CFD-Modellierungskomponente;
Simulieren eines geänderten Fluiddurchflusses des luftgekühlten Kondensators durch iteratives Ändern mindestens einer Eingangsvariablen des CFD-Modells;
Identifizieren einer optimierten Kombination von Eingangsvariablen auf der Grundlage einer Bewertung des geänderten Fluiddurchflusses; und
Übergeben der optimierten Kombination von Eingangsvariablen an die Modellierungskomponente für chemische Prozesse als Eingabe in ein chemisches Prozessmodell.

15. Computerimplementiertes Verfahren zum Einrichten eines Korrosionsschutzsystems für einen luftgekühlten Kondensator nach Anspruch 14, wobei die optimierte Kombination von Eingangsvariablen, die an die Modellierungskomponente für chemische Prozesse als Eingabe in ein chemisches Prozessmodell übergeben wird, mindestens eines von Folgendem umfasst: Temperatur, Druck, Gebläsenutzung, Gebläsedrehzahl, aktive Kondensatorfläche, Durchflussrate, chemische Zusammensetzung, Chemikalienkonzentration, Chemikaliendosierung, Chemikalienoberflächenkonzentration, Zeitpunkt der Chemikaliendosierung, Einspritzpunkt der Chemikaliendosierung, Typ der Vorrichtung zur Chemikalieninjektionszugabe, Typ der Chemikalieninjektionsdüse, Düsengröße, Düsenposition, Typ des Chemikalieninjektors, Injektorgröße, Injektorposition und/oder pH-Wert, Leitfähigkeit, Redoxpotenzial und Alkalinität eines mit dem luftgekühlten Kondensator assoziierten Prozessfluids.

## Revendications

1. Procédé mis en œuvre par ordinateur destiné à établir un système de protection contre la corrosion pour un condensateur refroidi par air, comprenant :
l'utilisation d'un ou plusieurs processeurs et d'une mémoire associée stockant un ou plusieurs programmes destinés à une exécution par les un ou plusieurs processeurs, les un ou plusieurs programmes incluant des instructions destinées à :
recevoir des données associées à au moins une propriété physique du condensateur refroidi par air ;
recevoir des données associées à au moins une condition de traitement chimique du condensateur refroidi par air ;
générer une composante de modélisation de traitement chimique sur la base des données reçues ;
simuler une condition initiale du condensateur refroidi par air en utilisant la composante de modélisation de traitement chimique ;
modifier au moins une propriété physique et/ou au moins une condition de traitement chimique du condensateur refroidi par air ;
recevoir des données de test associées à la propriété physique modifiée et/ou à la condition de traitement chimique ;
simuler une condition modifiée du condensateur refroidi par air sur la base de données de test ; et
identifier un système de protection contre la corrosion optimisé sur la base d'une évaluation de la condition modifiée.

2. Procédé mis en œuvre par ordinateur destiné à établir un système de protection contre la corrosion pour un condensateur refroidi par air selon la revendication 1, dans lequel les données de test comprennent une mesure d'au moins un parmi une vitesse de corrosion, un emplacement de corrosion, une activité de corrosion, une température ambiante, une température interne, un usage de ventilateur, une vitesse de ventilateur, une zone de condensateur active, un débit, une pression, une concentration de produits chimiques, un dosage de produits chimiques, une concentration de surfaces de produits chimiques, un horaire de dosage de produits chimiques et/ou un point d'injection de produits chimiques associé au condensateur refroidi par air.

3. Procédé mis en œuvre par ordinateur destiné à établir un système de protection contre la corrosion pour un condensateur refroidi par air selon les revendications 1 ou 2, dans lequel les données de test comprennent une mesure d'au moins un parmi un pH, une conductivité, un potentiel d'oxydo-réduction et/ou une alcalinité d'un fluide de traitement associé au condensateur refroidi par air.

4. Procédé mis en œuvre par ordinateur destiné à établir un système de protection contre la corrosion pour un condensateur refroidi par air selon l'une quelconque des revendications précédentes, dans lequel la condition de traitement chimique du condensateur refroidi par air comprend au moins un parmi une mesure d'une vitesse de corrosion, une activité de corrosion, un niveau de produits chimiques, une concentration de produits chimiques et/ou un pH, une conductivité, un potentiel d'oxydo-réduction et/ou une alcalinité d'un fluide de traitement associé au condensateur refroidi par air.

5. Procédé mis en œuvre par ordinateur destiné à établir un système de protection contre la corrosion pour un condensateur refroidi par air selon l'une quelconque des revendications précédentes, dans lequel la propriété physique du condensateur refroidi par air comprend au moins un parmi une pression, une température, un usage de ventilateur, une vitesse de ventilateur, une zone de condensateur active, un débit et/ou des données d'étirage en trois dimensions assisté par ordinateur associées à la structure physique du condensateur refroidi par air.

6. Procédé mis en œuvre par ordinateur destiné à établir un système de protection contre la corrosion pour un condensateur refroidi par air selon l'une quelconque des revendications précédentes, dans lequel la modification d'au moins une propriété physique et/ou d'au moins une condition de traitement chimique du condensateur refroidi par air comprend la modification d'au moins un parmi un pH, une conductivité, une chimie, une concentration de produits chimiques, un dosage de produits chimiques, un potentiel d'oxydo-réduction et/ou une alcalinité d'un fluide de traitement associé au condensateur refroidi par air et/ou au moins un parmi une température, une pression, un usage de ventilateur, une vitesse de ventilateur, une zone de condensateur active, un débit, un horaire de dosage de produits chimiques, un point d'injection de dosage de produits chimiques, un type de buse d'injection de produits chimiques, une taille de buse, un emplacement de buse, un type de tubulure d'injection de produits chimiques, une taille de tubulure et/ou un emplacement de tubulure.

7. Procédé mis en œuvre par ordinateur destiné à établir un système de protection contre la corrosion pour un condensateur refroidi par air selon l'une quelconque des revendications précédentes, dans lequel l'identification d'un système de protection contre la corrosion optimisé comprend la sélection d'une combinaison de deux ou plus parmi une chimie, un dispositif d'administration de produits chimiques, un emplacement de d'administration de produits chimiques et/ou un horaire d'administration de produits chimiques.

8. Procédé mis en œuvre par ordinateur destiné à établir un système de protection contre la corrosion pour un condensateur refroidi par air selon la revendication 7, dans lequel la chimie comprend au moins un parmi des produits chimiques filmogènes, des agents de passivation, des modificateurs de potentiel d'oxydo-réduction et/ou des produits chimiques d'ajustement du pH, des éliminateurs d'oxygène et des combinaisons de ceux-ci.

9. Procédé mis en œuvre par ordinateur destiné à établir un système de protection contre la corrosion pour un condensateur refroidi par air, comprenant :
l'utilisation d'un ou plusieurs processeurs et d'une mémoire associée stockant un ou plusieurs programmes destinés à une exécution par les un ou plusieurs processeurs, les un ou plusieurs programmes incluant des instructions destinées à :
recevoir des données associées à au moins une propriété physique du condensateur refroidi par air ;
recevoir des données associées à au moins une condition de traitement chimique du condensateur refroidi par air ;
générer une composante de modélisation de traitement chimique sur la base des données reçues ;
simuler une condition initiale du condensateur refroidi par air en utilisant la composante de modélisation de processus chimique ;
prédire une condition modifiée du condensateur refroidi par air en modifiant de manière itérative au moins une variable d'entrée de modèle de traitement chimique ; et
identifier un système de protection contre la corrosion optimisé sur la base d'une évaluation de l'état modifié.

10. Procédé mis en œuvre par ordinateur destiné à établir un système de protection contre la corrosion pour un condensateur refroidi par air selon la revendication 9, comprenant la réception de données de test associées à au moins une propriété physique ou au moins une propriété chimique du condensateur refroidi par air.

11. Procédé mis en œuvre par ordinateur destiné à établir un système de protection contre la corrosion pour un condensateur refroidi par air selon les revendications 9 ou 10, dans lequel la variable d'entrée de modèle de traitement chimique comprend au moins un parmi un pH, une conductivité, une chimie, une concentration de produits chimiques, un dosage de produits chimiques, un potentiel d'oxydo-réduction et/ou une alcalinité d'un fluide de traitement associé au condensateur refroidi par air et/ou au moins un parmi une température, une pression, un usage de ventilateur, une vitesse de ventilateur, une zone de condensateur active, un débit, un horaire de dosage de produits chimiques, un point d'injection de dosage de produits chimiques, un type de buse d'injection de produits chimiques, une taille de buse, un emplacement de buse, un type de tubulure d'injection de produits chimiques, une taille de tubulure et/ou un emplacement de tubulure.

12. Procédé mis en œuvre par ordinateur destiné à établir un système de protection contre la corrosion pour un condensateur refroidi par air selon l'une quelconque des revendications 8 à 11, dans lequel l'identification d'un système de protection contre la corrosion optimisé comprend la sélection d'une combinaison de deux ou plus parmi une chimie, un dispositif d'administration de produits chimiques, un emplacement d'administration de produits chimiques et/ou un horaire d'administration de produits chimiques.

13. Procédé mis en œuvre par ordinateur destiné à établir un système de protection contre la corrosion pour un condensateur refroidi par air selon la revendication 12, dans lequel la chimie comprend au moins un parmi des produits chimiques filmogènes, des agents de passivation, des modificateurs de potentiel d'oxydo-réduction et/ou des produits chimiques d'ajustement du pH, des éliminateurs d'oxygène et des combinaisons de ceux-ci.

14. Procédé mis en œuvre par ordinateur destiné à établir un système de protection contre la corrosion pour un condensateur refroidi par air selon l'une quelconque des revendications précédentes, comprenant :
la génération d'une composante de modélisation de mécanique des fluides numérique (MFN) sur la base des données de propriétés physiques et de condition de traitement chimique reçues ;
la détermination d'un écoulement de fluide initial associé au condensateur refroidi par air en utilisant la composante de modèle de MFN ;
la simulation d'un écoulement de fluide modifié du condensateur refroidi par air en modifiant de manière itérative au moins une variable d'entrée de modèle de MFN ;
l'identification d'une combinaison optimisée de variables d'entrée sur la base d'une évaluation de l'écoulement de fluide modifié ; et
la fourniture de la combinaison optimisée de variables d'entrée à la composante de modélisation de traitement chimique en tant qu'entrée de modèle de traitement chimique.

15. Procédé mis en œuvre par ordinateur destiné à établir un système de protection contre la corrosion pour un condensateur refroidi par air selon la revendication 14, dans lequel la combinaison optimisée de variables d'entrée fournies à la composante de modélisation de traitement chimique en tant qu'entrée de modèle de traitement chimique comprend au moins un parmi une température, une pression, un usage de ventilateur, une vitesse de ventilateur, une zone de condensateur active, un débit, une chimie, une concentration de produits chimiques, un dosage de produits chimiques, une concentration de surfaces de produits chimiques, un horaire de dosage de produits chimiques, un point d'injection de dosage de produits chimiques, un type de dispositif d'administration d'injection de produits chimiques, un type de buse d'injection de produits chimiques, une taille de buse, un emplacement de buse, un type de tubulure d'injection de produits chimiques, une taille de tubulure, un emplacement de tubulure et/ou un pH, une conductivité, un potentiel d'oxydo-réduction et une alcalinité d'un fluide de traitement associé au condensateur refroidi par air.
